# EUROPEAN PATENT APPLICATION

(11) **EP 2 192 094 A1**
(43) Date of publication of application: **02.06.2010**
(21) Application number: 08170062.7
(22) Date of filing: 27.11.2008
(51) Int. Cl.: C04B 26/14, C09K 8/42, C09K 8/44, C09D 5/34, C09D 163/00

(54) **Aqueous resin compositions and methods for cement repair**

(71) Applicant: Services Pétroliers Schlumberger, 75007 Paris (FR); Schlumberger Holdings Limited, Road Town, Tortola (VG); Schlumberger Technology B.V., 2514 JG The Hague (NL); Prad Research and Development Limited, Tortola (VG)
(72) Inventor: Carelli, Clara, 92142 Clamart (FR); Le Roy-Delage, Sylvaine, 92142 Clamart (FR)
(74) Representative: Hyden, Martin Douglas

(57) **Abstract**

A composition for use as a sealant in repairing cement in wellbores, comprising: an aqueous epoxy resin; a hardener; an alkali-swellable material (for example an alkali-swellable latex or hydrogel); and an aqueous carrier fluid.

## Description

### Technical field

This invention relates to compositions and methods for restoring zonal isolation in downhole environments, and more particularly to repairing faults in cement sheaths in order to restore zonal isolation. The invention finds particular application in well of the type used in the oil and gas industry.

### Background art

Squeeze or remedial cementing is a common operation in the petroleum industry and is used to address incomplete zonal isolation in oil and gas wells. Incomplete zonal isolation can arise from cracks, voids and channels due to improper primary cement job design or execution and/or stresses applied to the set cement in the annulus due to pressure and temperature change during the well life.

In current practice, micro-cement systems are used to repair cracks and other voids in cement sheaths. Special formulations with micro-cements and optimized particle size distributions are able to penetrate cracks with widths down to approximately 100 microns. However the size and concentration of the micro-cement particles do not allow penetration into cracks of a smaller size.

Epoxy resins are thermosetting polymers that cure (polymerize and crosslink) when mixed with a catalyzing agent or "hardener". Most common epoxy resins are produced from a reaction between epichlorohydrin and bisphenol-A. The applications for epoxy based materials are extensive and include coatings, adhesives and composite materials. The chemistry of epoxies allows the production of resins with a very broad range of properties. In general, epoxies are known for their excellent adhesion, good mechanical properties, and chemical and heat resistance.

In oilfield and downhole environments, epoxy resins have been used for many different applications: these include coatings for proppants and other particulate materials (for example in US20070293402A1, US20070160755A1, US7135231B1, US20070023187A1, US20080110623A1, US20060258546A1, W02000005302A1, WO2002026656A1), sand control (WO2007091007A1, US5178218A, US5101900A) formation consolidation (US5839510A, US7114570B2, WO2002046574A1, WO2004022914A1, EP266043B1) and drilling (US20070021309A1, US6739392B2).

Other documents describe the use of epoxy resins in zonal isolation (US5547027A, US20080023205A1 and WO2001090531A1, US5377757A, US20060234871A1, and US6802375B2). Although such materials can solve some of the problems encountered with traditional cement sealants, they present some drawbacks. In US5547027A, solvent based resins are used and a pre-flush may be required to obtain an adequate bonding. This can be costly, time consuming and difficult from an operational point of view. In other patents aqueous or water-compatible epoxy resins are employed to repair or plug openings. In these cases, where the curing of the resin is determined by the well temperature, the control of rheology and setting time can be difficult.

The present invention overcomes the problems with micro-cement systems for repairing cracks and also addresses the difficulties that have arisen with other uses of epoxy resins for zonal isolation.

### Disclosure of the invention

A first aspect of the invention provides a composition for use as a sealant in repairing cement in wellbores, comprising: an aqueous epoxy resin; a hardener; an alkali-swellable material (for example an alkali-swellable latex or hydrogel); and an aqueous carrier fluid.

Preferably, the composition further comprises a pH buffer, for example citric acid, to control the pH of the composition.

The amount of aqueous carrier fluid can be selected to provide a composition having a predetermined viscosity and/or rheology.

The alkali swellable latex typically has a dominant particle size of less than about 200 nanometres, and comprises polymer chains containing acid groups, such as TYCHEM 687100-00, ACRYSOL U 615, ALCOGUM SL-120 or SL-120, VISCALEX HV30, Latekoll DS and SYNTHOMER 9523.

The aqueous epoxy resin comprises a bisphenol A novalac resin; and the hardener comprises an amine hardener such as Epikure 6870-W-53, Epikure 3253 or Epikure 921 S.

It is preferred that the alkali swellable material comprises 30-70%, preferably 40-50% by weight; the epoxy resin comprises 4-20%, preferably 8-12% by weight; the hardener comprises 3-20%, preferably 8-12% by weight ; the citric acid solution comprises 2-20%, preferably 10-12% by weight; and the aqueous carrier fluid comprises 20-30%, preferably about 24% by weight.

It is particularly preferred that the composition is formulated so that it can be injected into a channel or crack narrower than 60 microns.

This invention also provides a method of repairing faults or cracks in cement sheaths or plugs comprising injecting the composition as described above into the crack or fault and allowing the composition to harden.

It is preferred that the alkali-swellable material in the composition swells on contact with the cement, this increasing the viscosity of the composition inside the crack in the cement.

Further aspects of the invention will be apparent from the following description.

### Brief description of the drawings

Figures 1 and 2 show shear stress as a function of the shear rate at two different temperatures for two formulations according to the invention;
Figure 3 shows a set-up used for injection tests; and
Figure 4 shows stress as a function of the strain during compressive cycles performed on two different gels.

### Mode(s) for carrying out the invention

The invention describes the use of sealant compositions containing aqueous epoxy resins combined with a hardener and alkali swellable materials to repair faults in cement sheaths and plugs, and restore zonal isolation.

When these fluids are injected inside a cement crack or another void in a cement sheath, the alkali swellable materials increase the viscosity of the fluid considerably, forming a viscous mass. This causes the resin to partially or completely harden due to the presence of the hardening agent. As a result, a sealant with increased compressive strength and improved properties is obtained.

This sealant formulation presents several advantages. During pumping, the fluid has a very low viscosity that is not dependent on the time. It will react only when it is placed in contact with cement to form a firm and resilient material. Moreover due to low viscosity and small particle size, the fluid can be injected into very narrow gaps.

The sealant composition of this invention contains aqueous epoxy resins. These materials present several advantages. They are compatible with other aqueous systems and easy to clean-up with water. Moreover they are stable if no evaporation of water occurs and their viscosity can be adjusted by adding water.

As epoxies are well known for their corrosion resistance, high compressive and shear-bend strength, their compatibility with strong acids and bases and their resistance to hydrocarbons and alcohols, they can improve the properties of the sealant formed considerably.

A wide variety of epoxy resins and hardeners are able to be used. A particularly suitable resin is commercially available from Hexion Specialty Chemicals under the trade designation "EPI-REZ-5003-W-55". This aqueous dispersion includes a bisphenol A novalac resin that contains 1 gram equivalent of epoxide for 205 grams of resin. Depending on the temperature, this resin can be formulated with different hardeners. The commercially available hardener under the trade name Epikure 6870-W-53, a tertiary amine, could be used at temperatures up to 100degC, while formulations containing Epikure 3253 and Epikure 921 S (DICY) are suitable for higher temperatures.

In the formulation of this invention an alkali swellable material, preferably an alkali swellable latex, is combined with the epoxy resin. Alkali swellable latexes (ASLs) are polymeric fluids containing acid groups in the polymer chains and which have a well-controlled particle size distribution (typically < 200 nanometers), and low viscosity. Addition of alkali to the ASL results in neutralization of the acid groups, generating an anionic charge at the acid sites along the polymer chain. The like charges repel one another resulting in swelling and uncoiling of the polymer. This extremely large increase in the volume of the neutralized polymer is responsible for a significant build-up of compound viscosity, at relatively low polymer concentration.

Without limitation, examples of suitable commercially available alkali swellable latexes include TYCHEM 68710-00 of Dow Chemical; ACRYSOL U 615 of Rohm and Hans; ALCOGUM SL-120, SL920 of Alco Chemical, a National Starch Company; VISCALEX HV30 of Ciba Specialty Chemicals, Latekoll DS from BASF; SYNTHOMER 9523 from SYNTHOMER.

Solutions based on alkali-swellable latexes (ASL) will have better penetration than micro-cement systems and have the advantage that they will set only in contact with cement (or other high pH source).

The current invention relates to the use of aqueous epoxy resins combined with alkali swellable materials to repair cracks, micro-annuli and other voids in cement sheaths. This aims to improve the long-term durability and the properties of the squeezed material.

Due to the small size of particles (a few hundreds of nanometres), the fluid will be able to penetrate into very small gaps. Moreover, the system will only react in contact with the cement that needs to be repaired. Once the ASL has swollen the resin will cure, improving the properties of the material formed.

### Examples

Formulations containing different amounts of the ASL, epoxy resin and a hardener have been prepared. The resin EPI-REZ-5003-W-55 and the curing agent Epikure 6870-W-53 have been blended first with a 0.1 M citric acid solution to lower the pH. Successively the fluid obtained has been blended with different amounts of ASL TYCHEM 68710-00, 40% in weight for formulation 1 and 50% weight in composition 2, as detailed in Table 1. Finally deionized water has been added to adjust the viscosity of the fluids.

**Table 1**

| **Formulation** | **1** | **2** |
|---|---|---|
| TYCHEM 68710-00 (wt %) | 40 | 50 |
| EPI-REZ-5003-W-55 (wt %) | 12 | 8 |
| Epikure 6870-W-53 (wt %) | 12 | 8 |
| 0.1M Citric Acid solution (wt %) | 12 | 10 |
| Deionized water (wt %) | 24 | 24 |

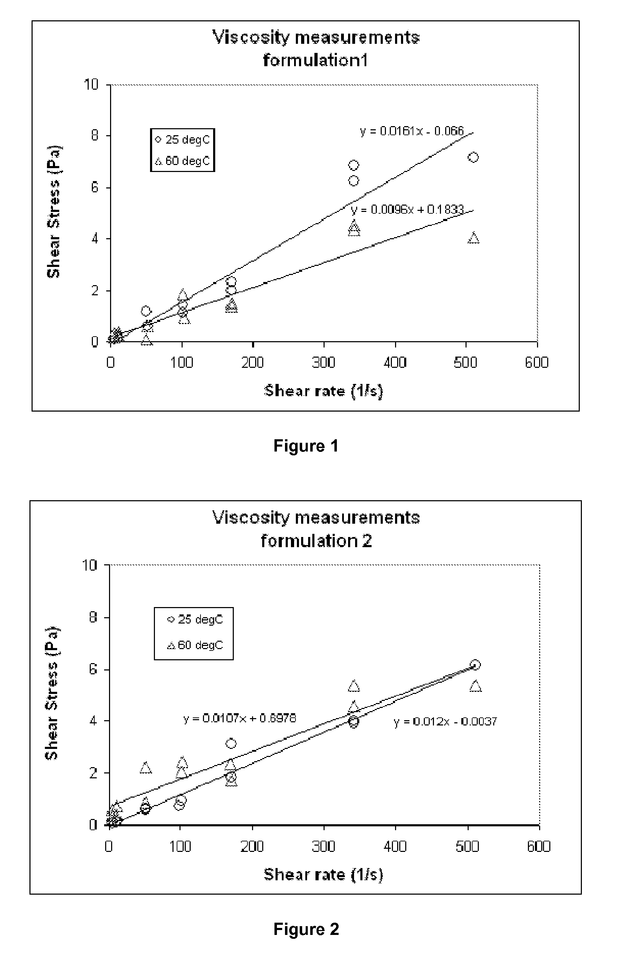

Rheology measurements have been performed at 25°C and at 60°C for both formulation 1 and 2. The values of shear stress as a function of the shear rate found for formulation 1 are plotted in Figure 1, while those obtained for formulation 2 are represented in Figure 2.

In Table 2 the plastic viscosity, Pv, and the yield stress, Ty, obtained by applying the Bingham model are reported for different temperatures.

**Table 2**

| **Temperature** | **25 °C** | **60 °C** |
|---|---|---|
| Formulation 1 | | |
| **P**ᵥ (cP) | 16 | 10 |
| **Ty** (lbm/100ft²) | <2 | <2 |

| Formulation 2 | | |
|---|---|---|
| **P**ᵥ (cP) | 12 | 11 |
| **Ty** (lbm/100ft²) | <2 | <2 |

As can be observed, the ASL/resin blends present low viscosity. The values obtained are considerably lower than those measured with standard cement systems.

To check the stability of the fluids, in particular at higher temperatures, formulations 1 and 2 have been left for 2 hours at 60°C. Rheology measurements performed after two hours showed no difference in the viscosity in this range of temperature.

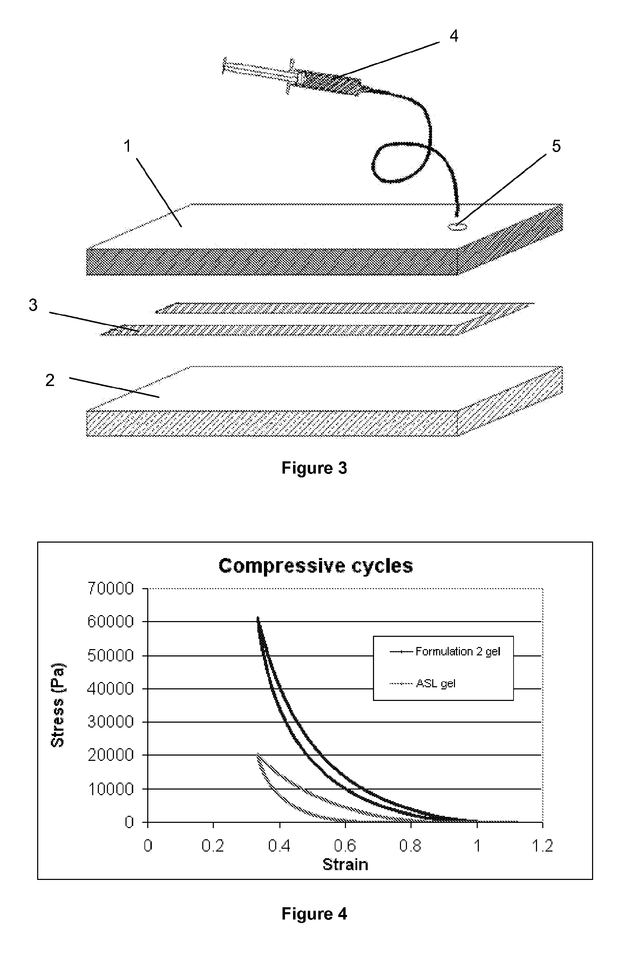

In order to test the ability of fluids containing epoxy resins and alkali swellable materials to penetrate in narrow gaps, injection tests have been performed by using a special set-up as shown in Figure 3.

This system is composed of a transparent Plexiglas plate (1) placed on a cement surface (2). Small clamps, not shown in the figure, are used to hold the plates together. A channel is obtained between the transparent plate and the cement surface by using spacers of well-defined thickness (3). To estimate the ability of the fluids to penetrate in narrow fractures the thickness of the gap can be adjusted.

The fluid is injected in the narrow channel by a syringe pump (4) through a hole (5) on the Plexiglas plate. During the test, the speed of injection is 5mL/min. After injection, the distance traveled by the fluid inside the gap is measured to determine its ability to penetrate. The maximum distance, defined by the size of the plates, is 23cm. The height of the narrower gap tested was approximately 60 microns. All the tests have been performed at room temperature.

Injection tests were performed on fluids having formulation 1 and 2. They have shown that both the fluids can be injected in channels narrower than 60 microns and the length of the channel they can penetrate is >23cm. If the test is run for more than 20 minutes the fluids start to plug the channel and the flow is stopped. This shows that ASL/resin based fluids can be used to repair very narrow fractures in cement.

In order to test the properties of the gel obtained when ASL/resin fluids are in contact with a basic material, a basic solution containing 10% by weight of sodium hydroxide has been mixed to the fluid of formulation 2. The weight ratio between the basic solution and the ASL/resin fluid was 1:2. As a comparison gels obtained by adding the same solution to the ASL TYCHEM 68710-00 have been tested.

To compare the strength of the materials compressive cycles have been applied to the gels at room temperature. The force necessary to apply a defined deformation with a flat probe has been measured. The gel samples had a diameter of 2 cm and the speed of the probe was fixed to 0.5 mm/s.

The results are plotted in Figure 4. As can be observed both materials have an elastic behaviour with a hysteresis. However a higher stress needs to be applied to the ASL/resin gel to obtain the same deformation due to the higher strength of the material.

Variations within the scope of the invention will be apparent.

## Claims

1. A composition for use as a sealant in repairing cement in wellbores, comprising:
- an aqueous epoxy resin;
- a hardener :
- an alkali-swellable material; and
- an aqueous carrier fluid.

2. A composition according to claim 1 wherein the alkali-swellable material is an alkali-swellable latex or hydrogel.

3. A composition as claimed in claim 1 or 2, further comprising a pH buffer to control the pH of the composition.

4. A composition as claimed in claim 3 wherein the pH buffer comprises a citric acid solution.

5. A composition as claimed in any preceding claim, wherein the amount of aqueous carrier fluid is selected to provide a composition having a predetermined viscosity and/or rheology.

6. A composition as claimed in any preceding claim wherein the alkali swellable material has a dominant particle size of less than about 200 nanometres.

7. A composition as claimed in claim 6, wherein the alkali swellable material comprises polymer chains containing acid groups..

8. A composition as claimed in any preceding claim, wherein the aqueous epoxy resin comprises a bisphenol A novalac resin.

9. A composition as claimed in any preceding claim, wherein the hardener comprises an amine hardener.

10. A composition as claimed in any preceding claim, wherein the alkali swellable material comprises 30-70% by weight of the composition.

11. A composition as claimed in any preceding claim wherein the epoxy resin comprises 4-20% by weight of the composition.

12. A composition as claimed in any preceding claim wherein the hardener comprises 3-20% by weight of the composition.

13. A composition as claimed in any preceding claim wherein the citric acid solution comprises 2-20% by weight of the composition.

14. A composition according to any preceding claim wherein the aqueous carrier solution comprises 20-30% by weight of the composition.

15. A composition as claimed in any preceding claim, comprising:
- alkali swellable latex: 40-50 wt%;
- aqueous epoxy resin: 8-12 wt%;
- hardener: 8-12 wt%;
- 0.1M citric acid solution: 10-12 wt%; and
- aqueous carrier fluid: 24 wt%.

16. A method of repairing faults or cracks in cement sheaths or plugs comprising injecting the composition as claimed in any preceding claim into the crack or fault and allowing the composition to harden.
